# EUROPEAN PATENT APPLICATION

(11) **EP 3 875 559 A1**
(43) Date of publication of application: **08.09.2021**
(21) Application number: 20161526.7
(22) Date of filing: 06.03.2020
(51) Int. Cl.: C09J 7/10, C09J 7/30, F25D 23/02

(54) **MULTILAYER MATERIAL COMPRISING AT LEAST ONE HOT MELT LAYER AND REFRIGERATOR DOOR COMPRISING THE SAME**

(71) Applicant: Henkel AG & Co. KGaA, 40589 Düsseldorf (DE)
(72) Inventor: Kim, Mansuk, Gyeonggi-do 13835 Gwacheon-si (KR); Kim, Launa Jungim, 08506 Seoul (KR); Kim , Ungtae, Gyeonggi-do 14068 Anyang city (KR)
(74) Representative: Viering, Jentschura & Partner mbB Patent- und Rechtsanwälte

(57) **Abstract**

The present invention refers to a multilayer material comprising a first styrene-based hot melt layer and a second styrene-based hot melt layer, in contact with the first hot melt layer, wherein the second hot melt layer has a higher oil content than the first hot melt layer. Furthermore, the invention refers to the use of the multilayer material according to the invention in a refrigerator. Moreover, the present invention refers to a refrigerator door comprising a styrene-based hot melt layer or the multilayer material according to the present invention. Finally, the present invention refers to a process for manufacturing a refrigerator door according to the present invention.

## Description

The present invention refers to a multilayer material comprising a first styrene-based hot melt layer and a second styrene-based hot melt layer, in contact with the first hot melt layer, wherein the second hot melt layer has a higher oil content than the first hot melt layer. Furthermore, the invention refers to the use of the multilayer material according to the invention in a refrigerator. Moreover, the present invention refers to a refrigerator door comprising a styrene-based hot melt layer or the multilayer material according to the present invention. Finally, the present invention refers to a process for manufacturing a refrigerator door according to the present invention.

In the known manufacturing processes of refrigerator doors with an outer metal case, when using polyurethane insulation material, the metal surfaces are prone to surface defects, also called rippling. Rippling is caused by dimensional change of the polyurethane insulation material that undergoes expansion as it foams exothermally and shrinkage as it cools down. Rippling occurrence gets recently more frequent, since the metal sheet used to make the outer case became thinner.

Commonly, a foamed polyurethane (PU) sheet with an open cell structure or a fabric layer is employed to prevent surface rippling. Such foamed PU sheets are manufactured in multilayers by complex roll process as described below, have to be tailor-cut to the shape of inner wall of refrigerator door's metal case and require manual attachment in most cases.

Exemplarily refrigerator doors are disclosed in KR 100997220 B1, KR 101314135 B1, KR 101348602 B1, and KR 101870509 B1 which require a foamed PU sheet or a fabric layer.

Due to their layers and complex structure, they have a limited possibility to be integrated into a conveyor-based flow of refrigerator assembly line and can also cause a dramatic increase in labor burden, operation error, thereby decreasing the efficiency. In addition, since their attachment to the target area demand either additional double-side tapes or adhesive layers formed in advance on the foamed PU sheet to be covered with release liners before use, a huge amount of material wastes is inevitable.

The object of the present invention thus was the provision of a refrigerator door with no or little surface defects of the metal, which can additionally overcome one or more of the above-described drawbacks of the prior art.

The inventors of the present invention have surprisingly found that the object of the present invention can be solved by the use of a styrene-based hot melt adhesive or the multilayer material of the present invention. In particular, by employing the styrene-based hot melt adhesive or the multilayer material the refrigerator doors according to the present invention can be manufactured using a robotically controlled automatic dispenser system. This allows a fast adaption of the process to several shapes of the door within a short time and does not require manually applied protective sheets prone to defects and connected with a higher workload and process steps.

Therefore, in a first aspect the present invention refers to a multilayer material comprising or consisting of
a first styrene-based hot melt layer and
a second styrene-based hot melt layer, in contact with the first hot melt layer, wherein the second hot melt layer has a higher oil content than the first hot melt layer.

In a second aspect the present invention refers to the use of the multilayer material according to the present invention in a refrigerator.

In a third aspect the present invention refers to a refrigerator door comprising
a styrene-based hot melt layer
or
the multilayer material according to the present invention.

Finally, in a fourth aspect, the present invention refers to a process for manufacturing a refrigerator door according to the present invention, comprising or consisting of the steps:
i) providing a metal sheet in the form of a refrigerator door case;
iia) applying a styrene-based hot melt adhesive to form a layer on the inner side of the metal sheet; or
iib) applying the first styrene-based hot melt adhesive to form a layer on the inner side of the metal sheet and subsequently applying a second styrene-based hot melt adhesive to form a layer on the first hot melt adhesive layer;
iii) optionally applying a release coating onto the second hot melt adhesive layer;
iv) assembling a plastic back cover with the obtained multilayer metal case of step iia), iib), or iii), which can optionally contain a polyurethane foam layer;
v) placing the door obtained in step iv) in a jig; and optionally
vi) injecting a 2K-polyurethane composition through an injection hole to form a polyurethane foam in the space between the multilayer metal case and the plastic back cover, if the plastic back cover in step iv) does not contain a polyurethane foam layer.

"One or more", as used herein, relates to "at least one" and comprises 1, 2, 3, 4, 5, 6, 7, 8, 9 or more of the referenced species. Similarly, "at least one" means "one or more", i.e. 1, 2, 3, 4, 5, 6, 7, 8, 9 or more. "At least one", as used herein in relation to any chemical component, refers to the number of chemically different atoms or molecules, i.e. to the number of different types of the referenced species, but not to the total number of atoms or molecules. For example, "at least one styrene-based copolymer" means that at least one type of styrene-based copolymer within the definition can be part of the composition, but that also two or more different types of styrene-based copolymers falling within this definition can be present, but does not mean that several compounds of only one type of styrene-based copolymer may be present.

Numeric values specified without decimal places refer to the full value specified with one decimal place. For example, "99 %" means "99.0 %", if not stated otherwise.

The expressions "approx." or "about", in conjunction with a numerical value, refer to a variance of ± 10 % relative to the given numerical value, preferably ± 5 %, more preferably ± 1 %, if not explicitly stated otherwise.

All percentages given herein in relation to the compositions relate to weight-% (wt.-%) relative to the total weight of the respective composition, if not explicitly stated otherwise.

The expression "essentially free of" means that the respective compound can be contained in the composition in principle, but then be present in a quantity that does not interfere with a function of the other components. In the context of the present invention, therefore, the property "essentially free of" a particular compound is preferably considered to be a total weight of less than 0.1 wt.-%, more preferably less than 0.001 wt.-%, in particular free (i.e. below detection limit) of this particular compound, based on the total weight of the composition.

Numeric ranges specified in the format "in/from x to y" include the values specified. If several preferred numeric ranges are specified in this format, it goes without saying that all ranges resulting from the combination of the different endpoints will also be included.

Molecular weight data refer to the number average molecular weight (Mₙ) in g/mol, unless the weight-average molecular weight is explicitly mentioned. It is preferably determined by GPC using polystyrene standards.

These and other aspects, features, embodiments, and advantages of the invention become apparent to the skilled person in the following detailed description and claims. Each feature or embodiment from one aspect of the invention can be used in any other aspect of the invention. Additionally, each feature of the material, method or use can be combined with any other feature or embodiment of the material, method or use. Furthermore, the examples contained herein are intended to describe and illustrate the invention, but do not restrict it and in particular, the invention is not limited to these examples.

In particular, the present invention refers to a multilayer material comprising or consisting of
a first styrene-based hot melt layer, preferably a hot melt pressure sensitive adhesive layer; and
a second styrene-based hot melt layer, preferably a hot melt pressure sensitive adhesive layer, in contact with the first hot melt layer, wherein the second hot melt layer has a higher oil content than the first hot melt layer.

The present invention employs styrene-based hot melt adhesives and styrene-based pressure sensitive adhesives, which are solely referred to as hot melt adhesives and pressure sensitive adhesives as well.

According to the present invention the term hot melt adhesive covers both hot melt adhesives, which are non-tacky when applying pressure and pressure sensitive adhesives. These terms are common to the skilled person in the field of hot melt adhesives. Pressure sensitive adhesives are for example defined in István Benedek, "Pressure sensitive adhesives and applications", 2nd Edition, 2004, Marcel Dekker, Inc. New York, Basel. In the following description of the preferred embodiments, the embodiments always refer to hot melt adhesives as well as to pressure sensitive adhesives, when only hot melt adhesives are described.

The first and the second hot melt adhesives and thus the layers thereof according to the present invention differ at least in their oil content. In a preferred embodiment both layers contain at least one oil. In various embodiments, the type(s) of oil the first and second layer comprise may be the same, in some embodiments, the oil or oil mixture may be identical so that the only difference is in the amount used.

In one embodiment the second hot melt layer contains at least 5 wt.-%, preferably at least 15 wt.-%, more preferably at least 25 wt.-% more oil than the first hot melt layer, based on the total weight of the respective layer. Accordingly, if oil is present in the first layer in an amount of 1 to 90, preferably 5 to 30, more preferably 5 to 20 wt.-%; the oil is present in the second layer in an amount of 10 to 95, preferably 20 to 95, more preferably 50 to 95 wt.-% with the different in content being at least 5 wt.-%, preferably at least 15 wt.-%, more preferably at least 25 wt.-%, relative to the respective total weight of the individual layer. In some embodiments, the oil content in the first layer is 5 to 30 wt.-% and the oil content in the second layer is 20 to 95 wt.-%, with the different being at least 5, at least 15 or at least 25 wt.-%. In some embodiments, the oil content in the first layer is 5 to 20 wt.-% and in the second layer 50 to 95 wt.-%.

In one embodiment the first hot melt layer comprises or consists of
a1) at least one styrene copolymer preferably selected from SBS, SIS, SEBS, SIBS, and combinations thereof, more preferably SBS;
b1) at least one tackifier, preferably C9-, C5-hydrocarbon resins or
   rosin esters, most preferably C9- and/or C5-hydrocarbon resins;
c1) at least one oil, preferably paraffinic oil and/or naphthenic oil, more preferably naphthenic oil;
d1) at least one antioxidant; and
e1) optionally at least one further additive, preferably selected from colorants, waxes, inorganic fillers, plasticizers or combinations thereof.

In one embodiment the second hot melt layer comprises or consists of
a2) at least one styrene copolymer preferably selected from SBS, SIS, SEBS, SIBS, and combinations thereof, more preferably SBS or SEBS;
b2) at least one tackifier, preferably C9-, C5-hydrocarbon resins or
   rosin esters, most preferably C9- and/or C5-hydrocarbon resins;
c2) at least one oil, preferably paraffinic oil and/or naphthenic oil, more preferably naphthenic oil;
d2) at least one antioxidant; and
e2) optionally at least one further additive, preferably selected from colorants, waxes, inorganic fillers, plasticizers or combinations thereof.

In a preferred embodiment
a1) is present in 5 to 60, preferably 10 to 40, more preferably 10 to 30 wt.-%;
b1) is present in 1 to 90, preferably 20 to 80, more preferably 40 to 70 wt.-%;
c1) is present in 1 to 90, preferably 5 to 30, more preferably 5 to 20 wt.-%;
d1) is present in 0.01 to 1, preferably 0.1 to 1, more preferably 0.2 to 0.5 wt.-%; and
e1) is present in 0 to 20, preferably 0.01 to 15, more preferably 0.1 to 10 wt.-%; based on the total weight of the first hot melt layer;
and/or
a2) is present in 1 to 40, preferably 2 to 30, more preferably 3 to 20 wt.-%;
b2) is present in 0 to 40, preferably 0 to 30, more preferably 0 to 20 wt.-%;
c2) is present in 10 to 95, preferably 20 to 95, more preferably 50 to 95 wt.-%;
d2) is present in 0.01 to 1, preferably 0.1 to 1, more preferably 0.2 to 0.5 wt.-%; and
e2) is present in 0 to 20, preferably 0.01 to 15, more preferably 0.1 to 10 wt.-%; based on the total weight of the second hot melt layer.

In general, all known styrene-based (co)polymers commonly employed in the field of hot melt adhesives are suitable. Preferably, the at least one styrene-based (co)polymer is at least one elastomeric styrene-based copolymer.

Illustrative examples of suitable materials are styrene-butadiene rubber (SBR), styrene-butadiene-styrene block copolymer (SBS), styrene-butadiene block copolymer (SB), hydrogenated styrene-butadiene-styrene block copolymer (SEBS), styrene-isoprene-styrene block copolymer (SIS), styrene-isoprene block copolymer (SI), styrene-isoprene-butadiene (SIBS), hydrogenated styrene-isoprene-styrene block copolymer (SEPS), and hydrogenated styrene-isoprene block copolymer (SEP).

The manufacture of, in particular elastomeric, styrene-based copolymers is known in the art and the skilled person knows how to obtain such polymers. Suitable polymers are for example commercially available under the tradename Kraton™ from Kraton Polymers LLC, for example Kraton™ D 1102 A or Kraton™ G 1640.

The elastomeric styrene-based copolymers of the present invention have preferably a styrene content of 1 to 30 wt.-% or 5 to 25 wt.-%, more preferably 10 to 22 wt.-%, most preferably 15 to 20 wt.-% based on the total weight of the respective copolymer.

The elastomeric styrene-based copolymers of the present invention have preferably a specific gravity measured according to ISO 1183 of 0.9 to 1.0, more preferably 0.92 to 0.97.

The elastomeric styrene-based copolymers of the present invention have preferably a glass transition temperature of -25 to -5 °C, more preferably -20 to -10, measured with DSC at a heating rate of - 10°C/min.

The elastomeric styrene-based copolymers of the present invention have preferably a Shore A Hardness of 30 to 80, more preferably 40 to 70, most preferably 50 to 65 measured according to DIN ISO 7619-1.

In one embodiment the first hot melt layer comprises at least one styrene copolymer preferably selected from SBS, SIS, SEBS, SIBS, and combinations thereof, more preferably SBS and/or the second hot melt layer comprises at least one styrene copolymer preferably selected from SBS, SIS, SEBS, SIBS, and combinations thereof, more preferably SEBS.

The first and second hot melt layer preferably further comprise at least one tackifier, respectively.

In general, all tackifiers, commonly known in the field of hot melt adhesives are suitable. Exemplarily tackifiers include aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and mixtures thereof.

In one embodiment the at least one tackifier has a ring and ball softening point from 70°C to 150 °C, and/or a viscosity at 350° F (177° C), as measured using a Brookfield viscometer, of no more than 2000 mPas. In various embodiments, the softening point can be determined using the method according to DIN EN 1238 (dated 2011/07). Useful examples include Eastotac™ H-100, H-115 and H-130 from Eastman Chemical Co., which are partially hydrogenated cycloaliphatic petroleum hydrocarbon resins with softening points of 100 °C, 115 °C and 130°C, respectively.

Other useful tackifier include Escorez™ 5300, 5400 and 5637, partially hydrogenated cycloaliphatic petroleum hydrocarbon resins, and Escorez™ 5600, a partially hydrogenated aromatic modified petroleum hydrocarbon resin all available from Exxon Chemical Co.; WINGTACK® Extra, which is an aliphatic, aromatic petroleum hydrocarbon resin available from Sartomer; WINGTACK® 95, an aliphatic C-5 petroleum hydrocarbon resin available from Sartomer; and Regalite R9001 and Regalite S5100, a hydrogenated hydrocarbon resins with different degree of hydrogenation, available from Eastman Chemical Company.

Suitable tackifier in particular include aliphatic hydrocarbon resins (C5 Resins), which are made from C5 piperylene and its derivatives. The most important ones are cis/trans 1,3-pentadienes, 2-methyl-2-butene, cyclopentene, cyclopentadiene, and dicyclopentadiene. These monomers are polymerized to oligomeric resins with low to high softening point using Lewis acid catalysts. C5 resins are aliphatic in nature. They are available in a wide range of molecular weights (MW) and softening points (solid grades 85 - 115°C and liquid grades 5 - 10°C) and provide outstanding tack. They also have a light yellow to light brown color and possess excellent heat stability.

Furthermore, aromatic hydrocarbon resins (C9 Resins), which made from C9 aromatic hydrocarbons are in particular suitable. Their composition depends on the hydrocarbon feedstock (coal tar, crude oil). The most important base monomers are indene, methyindenes, dicyclopentadiene, styrene, alphamethylstyrene and various vinyl toluenes. These resins are available in a wide range of softening points. Compared to C5 resins, they have a much higher melt viscosity, are of darker color (dark yellow to brown) and have higher softening point ranging from about 100 to 150°C.

Hydrogenated C5/C9 resins and resin blends are also commercially available. These resins are often colorless and have improved heat and color stability.

Further useful tackifier include rosins and modified rosins with differing levels of hydrogenation including gum rosins, wood rosins, tall-oil rosins, distilled rosins, dimerized rosins and polymerized rosins. Some specific modified rosins include glycerol and pentaerythritol esters of wood rosins and tall-oil rosins. Commercially available grades include, but are not limited to, Sylvatac™ RE103, a pentaerythritol rosin ester available from Arizona Chemical Co., Permalyn™ 5110, an pentaerythritol modified rosin available from Eastman Chemical Company and Foral 105 which is a highly hydrogenated pentaerythritol rosin ester also available from Eastman Chemical Company. Other examples include Sylvatac™ RE85 and RE95, which are 85 °C and 95 °C melt point rosin esters, Sylvaros PR 295 and Sylvaros PR 140, which are polymerized and modified rosins, and Sylvares TP2040 is a phenolic modified terpene resin available from Arizona Chemical Co. and Foral AX-E is an 80 °C melt point hydrogenated rosin acid available from Eastman Chemical Company. Another exemplary tackifier, Piccotac 1115, has a viscosity at 350 °F (177 °C) of about 1600 mPas. Other typical tackifiers have viscosities at 350 °F (177 °C) of much less than 1600 mPas, for instance, from 50 to 300 mPas.

In one embodiment the at least one tackifier of the first and/or the second hot melt layer is selected from C9 and/or C5 hydrocarbon resins or rosin ester, preferably C9 and/or C5 hydrocarbon resins. In an alternative embodiment the at least one of the first and/or the second hot melt layer is selected from rosin ester.

The first hot melt adhesive layer comprises at least one oil. The second hot melt adhesive layer preferably comprises at least one oil.

Suitable oils, in the present compositions employed as plasticizer, are preferably selected from the group consisting of naphthenic oils, paraffinic oils, vegetable and animal oils and derivatives thereof. Fully hydrogenated plasticizers can be selected from paraffinic hydrocarbon oils (including those available, for example, under the tradename PRIMOL from ExxonMobil Chemicals), polyisobutylenes, poly-1-butene oils and hydrogenated naphthenic oils. Preferably, the polyisobutylenes have a molecular weight ranging from about 600 to 5000 g/mol, more preferably from 800 to 4000 g/mol. Typically they are highly viscous liquids at room temperature. Suitable polyisobutylenes are available under the tradename "Parapol" from EXXON Chemicals or under the tradename "Oppanol" from BASF. Preferred plasticizers are paraffinic oils, more preferably with viscosities of 100 to 600 mPas, preferably 150 to 300 mPas at 25 °C as well as naphthenic oils, in particular naphthenic oils are preferred.

In one embodiment the first and second hot melt adhesive layer further comprise at least one antioxidant, respectively.

Suitable antioxidants according to the present invention may be any of the substances known in the art to be effective in retarding the oxidation or degradation of polymers, including, for example, high molecular weight hindered phenols and multifunctional phenols. Hindered phenols are well known to those skilled in the art to be effective primary stabilizers for styrene-based copolymers. Typical commercially available stabilizers of these types are supplied by Ciba-Geigy under the tradenames IRGANOX 1010 and IRGANOX 1076. Useful secondary stabilizers include phosphorus- and sulfur-containing compounds, such as tris-(p-nonylphenyl)-phosphite (TNPP) and bis(2,4-di-tert-butylphenyl)4,4'-diphenylene-diphosphonite and di-stearyl-3,3'-thiodipropionate (DSTDP).

The first and the second hot melt adhesive layer can optionally contain at least one additive, respectively. Suitable additives are those commonly employed in the field of hot melt adhesives and for example include colorants, waxes, inorganic fillers, plasticizers, different from oils, or combinations thereof.

To obtain a hot melt layer, the different components are blended together by common technics in the art. This can be done in any known device, e.g., batch reactor, extruder, mixer, kneader or similar machines. The hot melts are then brought into the form of a layer, for example by slot-extrusion etc.

In one embodiment the first and the second hot melt layer have a thickness of 0.5 to 2.5 mm, preferably 0.8 to 1.5 mm, respectively.

In one embodiment, the first hot melt adhesive layer has a Brookfield viscosity of less than 20,000 mPas, preferably less than 10,000 mPas and more particularly in the range of 4,000 and 8,000 mPas at 180 °C, preferably 6000 mPas at 180 °C, measured according to ASTM D 3236-88 (Brookfield Model : DV-E, spindle 27).

In one embodiment, the second hot melt adhesive layer has a Brookfield viscosity of less than 15,000 mPas, preferably less than 8,000 mPas and more particularly in the range of 1,000 and 4,000 mPas at 120 °C, preferably 4000 mPas at 120 °C, measured according to ASTM D 3236-88 (Brookfield Model : DV-E, spindle 27).

In one embodiment, the first hot melt adhesive layer has a peel adhesion of higher than 10N/25mm , preferably higher than 40N/25, measured according to PSTC (Pressure Sensitive Tape Council)-1 where Al-foil is used as backing film and stainless steel as a substrate.

In one embodiment, the first hot melt adhesive layer has an elongation @break of higher than 50%, more preferably higher than 100%, measured according to ASTM D3759.

In one embodiment, the first hot melt adhesive layer has a peel adhesion of lower than 10N/25mm , preferably higher than 2N/25mm, measured according to PSTC (Pressure Sensitive Tape Council)-1 where Al-foil is used as backing film and stainless steel as a substrate.

In one embodiment, the second hot melt adhesive layer has an elongation @break of higher than 20%, more preferably higher than 50%, measured according to ASTM D3759.

The multilayer material according to the present invention can further comprise a release coating, preferably on one side of the first and/or the second hot melt adhesive layer, more preferably on the second hot melt adhesive layer. In general, all known release coatings in the field of styrene-based hot melt adhesives are suitable. In a preferred embodiment the release coating is obtained from at least one aqueous silicone-functionalized polyurethane dispersion, more preferably at least one aliphatic aqueous silicone-functionalized polyurethane dispersion. Such dispersions are for example commercially available under the tradename ESACOTE PU 921 from Lamperti or under the tradename Aquence SW 07 from Henkel AG. Further suitable polyurethane dispersions are for example disclosed in US 7,439,299, US 6,641,922, US 6,541,109 B1 and EP 3263614 A1, including their application methods.

In one embodiment two aliphatic aqueous silicone-functionalized polyurethane dispersions are employed subsequently to form the release coating.

In one embodiment, the release coating has a thickness of 0.01 to 1.0 mm, preferably 0.025 to 0.05 mm.

The multilayer material according to the present invention preferably further comprises a metal sheet, preferably a steel, for example stainless steel, galvanized steel, PCM steel or pre-coated metal, or film(polymer) laminated steel sheet, or aluminum sheet, in contact with the first hot melt layer.

In general, all metal sheets are suitable, which can be used for a refrigerator door. In one embodiment, the metal sheet has a thickness of 0.5 to 2.5 mm, preferably 0.8 to 1.5 mm.

In one embodiment the first hot melt adhesive layer covers one side of the metal sheet completely. In another embodiment the first hot melt adhesive layer covers one side of the metal sheet partly. In embodiments where the first hot melt adhesive layer covers one side of the metal sheet only partly, the second hot melt layer, which is in contact with the first hot melt layer can also be in contact with the parts of the metal sheet, which are not covered by the first hot melt layer.

The multilayer material according to the invention is used in a refrigerator, preferably in a refrigerator door, as protection layer, preferably to prevent surface rippling.

Furthermore, the present invention refers to a refrigerator door comprising
a styrene-based hot melt layer, preferably hot melt pressure sensitive adhesive layer;
optionally a release coating, preferably obtained from an aqueous silicone-functionalized polyurethane dispersion, in contact with the hot melt layer; and
optionally a metal sheet, preferably a steel or aluminum sheet, in contact with the hot melt layer;
or
the multilayer material according to the present invention.

Finally, the present invention refers to a process for manufacturing a refrigerator door according to the present invention, comprising or consisting of the steps:
i) providing a metal sheet in the form of a refrigerator door case;
iia) applying the first styrene-based hot melt adhesive to form a layer on the inner side of the metal sheet; or
iib) applying the first styrene-based hot melt adhesive to form a layer on the inner side of the metal sheet and subsequently applying a second styrene-based hot melt adhesive to form a layer on the first hot melt adhesive layer;
iii) optionally applying a release coating, preferably by spraying, onto the second hot melt adhesive layer;
iv) assembling a plastic back cover with the obtained multilayer metal case of step iia), iib), or iii), which can optionally contain a polyurethane foam layer;
v) placing the door obtained in step iv) in a jig; and optionally
vi) injecting a 2K-polyurethane composition through an injection hole to form a polyurethane foam in the space between the multilayer metal case and the plastic back cover, if the plastic back cover in step iv) does not contain a polyurethane foam layer.

In general refrigerator doors comprise an insulation layer, which is commonly a polyurethane foam. According to the present invention the polyurethane foam layer is either already provided on the plastic back cover and assembled in step iv) or the other parts form the door, which includes an empty space formed between the metal case and the plastic back cover, in which a two component (2K) polyurethane composition is injected in step vi). This composition then fills out the empty space by forming a polyurethane foam layer. Suitable PU-foams are known to the skilled person in the field of refrigerator door production.

In one embodiment the process is performed with an automatic assembly line.

The formed first hot melt adhesive layer can completely or partly cover the metal sheet. The second hot melt layer can completely or partly cover the first hot melt adhesive layer. In embodiments where the first hot melt adhesive layer covers the metal sheet only partly, the second hot melt layer, which is in contact with the first hot melt layer can also be in contact with the parts of the metal sheet, which are not covered by the first hot melt layer.

### Examples

A refrigerator door can be prepared according to the following general procedure:
(1) Outer metal case of refrigerator door is prepared and aligned on the bench
(2) One or optionally two hot melt pressure sensitive adhesive (HMPSA)s are robotically dispensed to form a layer on top of inner surface of the outer metal case of the refrigerator door having a thickness of about 0.8 to 1.5mm.
(3) Optionally, the second HMPSA layer can be treated with aliphatic aqueous silicone-functionalized polyurethane dispersions (for instance: ESACOTE PU 921 from Lamperti) sprayed on it to obtain a release coating. Herein releasing surface was obtained by spraying aqueous dispersion then by drying under ambient condition. But, generally, drying can be facilitated using a convection oven at a temperature between 30 °C and 60 °C.
(4) Back cover made of plastic material is assembled with metal case bearing layers described in (2) and (3).
(5) Assembled door cell is placed tight in a jig, preferably under a given condition.
(6) 2K (two components) liquid polyurethane composition is charged through injection hole into the space formed between metal case and plastic back cover and allowed to react, foam and get solidified.
(7) Once insulation polyurethane is formed in a rigid state and cooled down, surface of outer metal plate is inspected.

The prepared refrigerator door included two HMPSA layers and a release coating. The refrigerator door was prepared according to the above-mentioned general procedure.

The two HMPSA layer had following compositions:

| | HMPSA-I | HMPSA-II |
|---|---|---|
| Styrene block copolymer* | 25.5 | 15 |
| C9-modified C5 tackifier | 60 | 20 |
| Naphthalenic oil | 14 | 60 |
| Antioxidant | 0.5 | 0.5 |
| Wax** | - | 4.5 |

| | | |
|---|---|---|
| * copolymer of styrene-butadiene-styrene **Polyethylene wax | | |

Due to the use of the different hot melt layers having different oil contents an excellent refrigerator door without any surface defects on the metal surface was obtained.

Due to the use of the first hot melt layer, which was in direct contact with the metal sheet, the metal sheet showed a dramatic increase in withstanding the expansive stress developed during the PU foaming reaction and thus irreversible deformative buckling or warpage of the metal sheet was avoided. The softer second hot melt layer, with a higher oil content, additionally dampened the expansive stress over PU foaming and also helps to increase stress relief when solidified PU foam underwent intensive shrinkage dooring cooling due to its low adhesion with the release coating. The release coating additionally helped to increase stress relief and prevented the surface defects of the metal sheet.

A further refrigerator door was prepared like above, with the exception that only HMPSA-I, i.e. a single styrene-based hot melt adhesive layer, was employed and no additional release coating was applied. The obtained door as well showed no surface defects on the metal sheet.

## Claims

1. Multilayer material comprising or consisting of
a first styrene-based hot melt layer; and
a second styrene-based hot melt layer, in contact with the first hot melt layer, wherein the second hot melt layer has a higher oil content than the first hot melt layer.

2. Multilayer material according to claim 1, wherein the second hot melt layer contains at least 5 wt.-% more oil than the first hot melt layer, based on the total weight of the respective layer.

3. Multilayer material according to claim 1 or 2, wherein the oil content in the first hot melt layer is in the range of 1 to 90, preferably 5 to 30, more preferably 5 to 20 wt.-%, relative to the total weight of the layer, and/or the oil content of the second hot melt layer is in the range of from 10 to 95, preferably 20 to 95, more preferably 50 to 95 wt.-%, relative to the total weight of the layer.

4. Multilayer material according to any of the preceding claims, wherein the oil content in the first hot melt layer is 5 to 20 wt.-%, relative to the total weight of the layer, and the oil content of the second hot melt layer is 50 to 95 wt.-%, relative to the total weight of the layer

5. Multilayer material according to any of the preceding claims, wherein
the first hot melt layer comprises or consists of
a1) at least one styrene copolymer;
b1) at least one tackifier;
c1) at least one oil;
d1) at least one antioxidant; and
e1) optionally at least one further additive;
the second hot melt layer comprises or consists of
a2) at least one styrene copolymer;
b2) at least one tackifier;
c2) at least one oil;
d2) at least one antioxidant; and
e2) optionally at least one further additive.

6. Multilayer material according to claim 5, wherein
a1) is present in 5 to 60, preferably 10 to 40, more preferably 10 to 30 wt.-%;
b1) is present in 1 to 90, preferably 20 to 80, more preferably 40 to 70 wt.-%;
c1) is present in 1 to 90, preferably 5 to 30, more preferably 5 to 20 wt.-%;
d1) is present in 0.01 to 1, preferably 0.1 to 1, more preferably 0.2 to 0.5 wt.-%; and
e1) is present in 0 to 20, preferably 0.01 to 15, more preferably 0.1 to 10 wt.-%; based on the total weight of the first hot melt layer;
and/or
a2) is present in 1 to 40, preferably 2 to 30, more preferably 3 to 20 wt.-%;
b2) is present in 0 to 40, preferably 0 to 30, more preferably 0 to 20 wt.-%;
c2) is present in 10 to 95, preferably 20 to 95, more preferably 50 to 95 wt.-%;
d2) is present in 0.01 to 1, preferably 0.1 to 1, more preferably 0.2 to 0.5 wt.-%; and
e2) is present in 0 to 20, preferably 0.01 to 15, more preferably 0.1 to 10 wt.-%; based on the total weight of the second hot melt layer.

7. Multilayer material according to any of the preceding claims, wherein the multilayer material further comprises a release coating in contact with the second hot melt layer.

8. Multilayer material according to any of the preceding claims, wherein the multilayer material further comprises a metal sheet in contact with the first hot melt layer.

9. Use of the multilayer material according to any of claims 1 to 8 in a refrigerator.

10. A refrigerator door comprising
a styrene-based hot melt layer;
optionally a release coating in contact with the hot melt layer; and
optionally a metal sheet in contact with the hot melt layer;
or
the multilayer material according to any of claims 1 to 8

11. A process for manufacturing a refrigerator door according to claim 10, comprising or consisting of the steps:
i) providing a metal sheet in the form of a refrigerator door case;
iia) applying a styrene-based hot melt adhesive to form a layer on the inner side of the metal sheet; or
iib) applying the first styrene-based hot melt adhesive to form a layer on the inner side of the metal sheet and subsequently applying a second styrene-based hot melt adhesive to form a layer on the first hot melt adhesive layer;
iii) optionally applying a release coating onto the second hot melt adhesive layer;
iv) assembling a plastic back cover with the obtained multilayer metal case of step iia), iib), or iii), which can optionally contain a polyurethane foam layer;
v) placing the door obtained in step iv) in a jig; and optionally
vi) injecting a 2K-polyurethane composition through an injection hole to form a polyurethane foam layer in the space between the multilayer metal case and the plastic back cover, if the plastic back cover in step iv) does not contain a polyurethane foam layer.

12. The process of claim 11, wherein the process is performed with an automatic assembly line.
